# FASCICULE DE BREVET EUROPEEN

(11) **EP 0 497 248 B1**
(45) Date de publication et mention de la délivrance du brevet: **25.05.1994**
(21) Numéro de dépôt: 92101286.0
(22) Date de dépôt: 27.01.1992
(51) Int. Cl.: H01R 13/53

(54) **Connexion électrique notamment pour poste électrique modulaire moyenne tension**
Elektrische Verbindung, insbesondere für modulare Mittelspannungsanlage
Electrical connection especially for medium voltage modules of electrical cabinet

(30) Priorité: 01.02.1991 FR 9101154
(43) Date de publication de la demande: 05.08.1992
(73) Titulaire: GEC ALSTHOM SA, 75116 Paris (FR)
(72) Inventeur: Joyeux-Bouillon, Bernard, F-01380 Bage le Chatel (FR); Maineult, Jean, F-01250 Ceyzeriat (FR)
(74) Mandataire: Weinmiller, Jürgen

(56) Documents cités:
- EP-A- 0 199 208
- US-A- 3 639 892

## Description

La présente invention se rapporte à un agencement de connexion d'au moins une paire de conducteurs, l'un des conducteurs, dit premier conducteur, de chaque paire traversant une paroi d'un premier compartiment et l'autre conducteur, dit second conducteur, de chaque paire traversant une paroi d'un second compartiment, l'extrémité du premier conducteur étant reliée à celle du second conducteur par un organe de liaison électrique, cette liaison électrique étant protégée par un agencement d'isolation.

Une application préférée de cet agencement de connexion consiste en l'équipement de postes électriques modulaires à enveloppe sous isolation gazeuse en particulier pour moyenne tension.

Il est connu de réaliser des connexions électriques dans l'air isolées par des écrans en matière isolante de grande dimension. De telles connexions évoluent à cause de la condensation, de façon préjudiciable.

On peut également noyer la liaison électrique dans une matière isolante. Ce procédé implique une mise en oeuvre sur le site qui entraîne un prix de revient relativement élevé de ce type de liaison. Par ailleurs le démontage aisé de cette liaison est impossible.

Par ailleurs, deux types de connexion sont utilisés pour la liaison de postes électriques. Il s'agit des connexions dites à huile et de celles dites à élastomère.

Le premier type de connexion est, par exemple, décrit dans le brevet français FR-2 069 931 qui se rapporte aux dispositifs de liaison électrique entre au moins deux contacts sous tension dans divers compartiments d'un poste électrique. Ces dispositifs de liaison électrique haute tension permettent le découplement des parties sous tension appartenant à divers compartiments. Dans chaque compartiment est prévue une cuvette contenant un diélectrique liquide et dont le fond est muni d'un contact embrochable relié au conducteur. Une barre en matériau conducteur en forme de U renversé relie deux contacts. Cette barre est recouverte d'un isolant sur sa partie émergeante.

De telles connexions sont relativement encombrantes et posent de plus des problèmes d'étanchéité.

Le brevet français FR-2 295 599 décrit quant à lui une connexion du type à élastomère. Plus précisément la jonction décrite dans ce brevet est destinée à relier électriquement des parties de jeux de barres ou des raccordements de câbles d'un poste électrique. Les conducteurs sont enrobés d'un isolant solide tel de la résine époxy. Leur connexion électrique est entourée par un déflecteur métallique. Un manchon élastomère se trouve autour de la connexion et des isolants, pressé par les coquilles métalliques assemblées par boulonnage ou équivalent. Ces coquilles forment aux deux extrémités des déflecteurs de champ coniques se raccordant à la surface métallisée des isolants.

Ces connexions posent également des problèmes de mise en oeuvre. Elles ne sont pas de démontage aisé et ne peuvent être essayées sur site.

L'invention se propose de résoudre ces problèmes en fournissant un agencement de connexion électrique qui soit de mise en oeuvre particulièrement facile, ne nécessitant aucun traitement spécifique du montage. Cet agencement est de montage et de démontage aisé ; il est peu encombrant et ces caractéristiques d'étanchéité sont telles que la connexion est inondable. Il est donc d'un coût peu élevé tout en ayant de bonnes propriétés électriques ; il ne présente pas de décharge partielle à 1,5 U, U étant la tension du réseau et supporte l'onde de foudre sans nécessiter les distances classiquement utilisées entre contacts.

Pour ce faire, l'agencement de connexion conforme à l'invention est remarquable en ce que les parois sont en matière isolante et sont reliées l'une à l'autre par l'intermédiaire d'un joint d'étanchéité périphérique garantissant entre elles un espace rempli d'air sec.

Afin de réaliser l'assèchement de l'air entre parois, un produit de dessiccation est disposé dans l'espace limité par les parois à proximité de la périphérie de celles-ci.

Ainsi est garanti un taux d'humidité de l'air qui deviendra plus faible que le jour de l'assemblage de cette connexion.

Il est en effet préférable que ce produit soit le plus éloigné possible des contacts électriques. Ce produit peut être dimensionné avec un fort coefficient de sécurité afin d'assécher l'air en cas de microfuites au travers du joint d'étanchéité.

Selon un mode de réalisation préféré, chaque paroi comprend des languettes proéminentes vers l'extérieur du compartiment et entourant chaque conducteur, les languettes de la première paroi s'intercalant entre les languettes de la seconde paroi, créant un espace en chicanes entre parois.

De préférence, les languettes sont disposées selon des cercles concentriques autour de chaque conducteur.

Ce montage de languettes alternées permet d'obtenir une augmentation simultanée des longueurs des lignes de fuite et d'étincelle qui sont les deux grandeurs prépondérantes de la tenue diélectrique. Ainsi, cette disposition constructive permet de réduire l'encombrement du système de connexion.

L'application préférée de l'agencement de connexion conforme à l'invention consiste à l'équipement de postes électriques modulaires à enveloppe sous isolation gazeuse en particulier pour moyenne tension, le jeu de barres traversant les parois latérales de l'enveloppe.

L'invention est exposée ci-après plus en détail à l'aide de dessins représentant seulement un mode d'exécution.

La figure 1 est une vue en coupe selon un plan passant par l'axe de plusieurs conducteurs reliés par paire, d'un agencement conforme à l'invention.

La figure 2 est une vue en perspective d'une paroi équipée d'un agencement conforme à l'invention et traversée par un jeu de conducteurs.

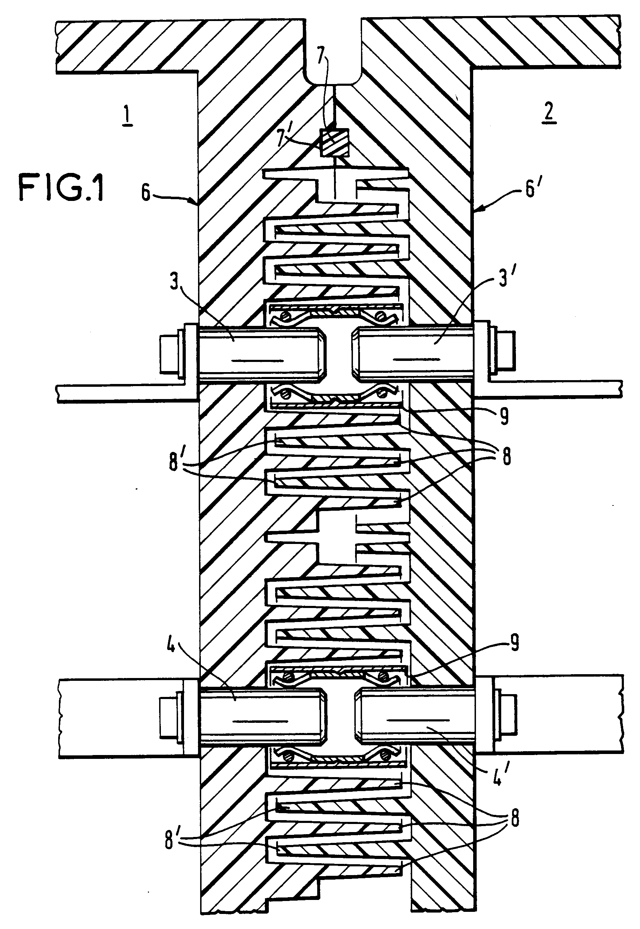

Sur la figure 1, sont représentés deux compartiments 1 et 2, reliés l'un à l'autre électriquement par l'intermédiaire de contacts traversant respectivement une paroi de ces compartiments. Seules deux paires de contacts sont représentées, sur la figure 1 qui est une vue partielle. En règle générale dans le cas de liaison de postes électriques modulaires, chaque jeu de barres comporte trois barres. Les paires de contacts 3, 3′, 4, 4′ sont reliées à l'aide d'un connecteur électrique, connu en soi 9.

Les contacts 3, 4, 3′, 4′ traversent des parois 6, 6′ délimitant les compartiments 1, 2. Ces parois 6, 6′ sont en matériau isolant, par exemple en résine époxy ou en polyuréthanne.

Pour réaliser l'isolation de la connexion électrique, elles sont reliées l'une à l'autre grâce à un joint d'étanchéité 7. Ainsi est délimité entre elles un espace rempli d'air sec assurant la tenue diélectrique. Selon l'exemple représenté, le joint élastomère 7 est inséré dans des rainures 7′ conformées respectivement dans chaque paroi 6, 6′ et entourant l'ensemble des contacts. Généralement, ce joint 7 sera positionné à proximité de la périphérie de la paroi. Le joint d'étanchéité peut également être conformé par un agencement d'emboîtement par rainure et nervure réalisé respectivement sur chaque paroi.

Lors de l'assemblage, un produit de dessiccation, de préférence en sachet, est mis en place dans cet espace, assurant l'assèchement de l'air emprisonné dans l'agencement de connexion.

Ce produit de dessiccation peut être préalablement saturé de gaz SF6. Il libérera progressivement ce gaz dans la cavité étanche assurant une augmentation de la tenue diélectrique dans le temps.

Chaque paroi 6, 6′ est constituée de façon analogue. Elle comprend, des languettes 8, 8′ faisant saillie vers l'extérieur de la paroi 6, 6′. Ces languettes formant écrans sont disposées autour de chaque contact 3, 4, 3′, 4′. Lorsque les parois 6, 6′ sont reliées, les languettes de chaque paroi viennent s'intercaler les unes entre les autres, en formant un espace d'air sec en forme de chicanes, comme il est visible sur la figure 1.

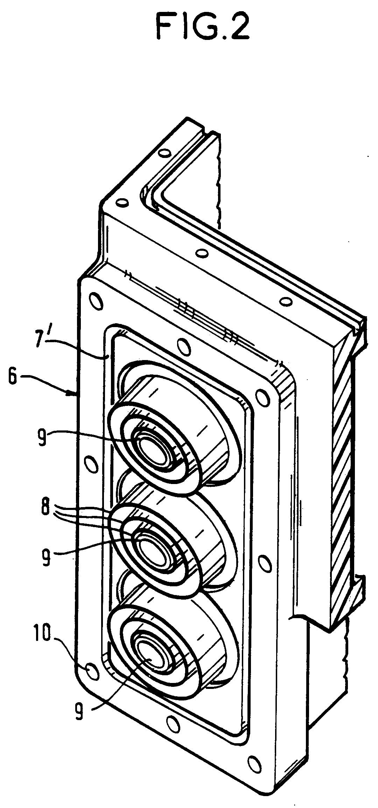

Une disposition préférée des languettes est visible sur la figure 2. Elles sont disposées en forme de cercles concentriques autour de chaque conducteur.

Les parois sont serrées l'une contre l'autre par boulonnage ou moyen mécanique équivalent, grâce à un agencement d'orifices filetés 10. Ainsi est comprimé entre elles le joint d'étanchéité périphérique logé dans la rainure 7′. Ce joint est de préférence en élastomère.

Le mode d'exécution représenté et préféré consiste en la liaison de jeu de barres de poste électrique modulaire à enveloppe sous isolation gazeuse en particulier pour moyenne tension.

Les jeux de barres traversent les parois 6, 6′ par leurs contacts 3, 4, 3′, 4′. Ces parois 6, 6′ constituent les parois latérales des postes modulaires qui peuvent ainsi être reliés électriquement grâce à l'agencement de connexion conforme à l'invention.

Cet agencement peut être utilisé également et de façon plus générale pour la connexion d'une seule paire de contacts. Il peut alors trouver son application pour la liaison de boîte à câbles ou de puits de fusibles sur un poste électrique.

## Revendications

1. Agencement de connexion d'au moins une paire de conducteurs (3, 3′) (4, 4′), l'un des conducteurs (3, 4) , dit premier conducteur, de chaque paire traversant une paroi (6) d'un premier compartiment (1) et l'autre conducteur (3′, 4′), dit second conducteur, de chaque paire traversant une paroi (6′) d'un second compartiment (2), l'extrémité du premier conducteur étant reliée à celle du second conducteur par un organe de liaison électrique (9), cette liaison électrique étant protégée par un agencement d'isolation, caractérisé en ce que les parois (6, 6′) sont en matière isolante et sont reliées l'une à l'autre par l'intermédiaire d'un joint d'étanchéité périphérique (7) garantissant entre elles un espace rempli d'air sec et constituant ledit agencement d'isolation.

2. Agencement selon la revendication 1, caractérisé en ce qu'un produit de dessiccation est disposé dans l'espace limité par les parois (6, 6′) à proximité de la périphérie de celles-ci.

3. Agencement selon la revendication 1 ou 2, caractérisé en ce que chaque paroi (6, 6′) comprend des languettes (8, 8′) proéminentes vers l'extérieur du compartiment (1, 2) et entourant chaque conducteur, les languettes (8) de la première paroi (6) s'intercalant entre les languettes (8′) de la seconde paroi (6′), créant un espace en chicanes entre parois.

4. Agencement selon la revendication 3, caractérisé en ce que les languettes (8, 8′) sont disposées selon des cercles concentriques autour de chaque conducteur (3, 4, 3′, 4′).

5. Agencement selon l'une quelconque des revendications précédentes, caractérisé en ce que les parois (6, 6′) sont en résine époxy.

6. Agencement selon la revendication 5, caractérisé en ce que les parois (6, 6′) sont en polyuréthanne.

7. Agencement selon la revendication 2, caractérisé en ce que le produit de dessiccation est préalablement saturé de gaz SF6.

8. Poste électrique modulaire à enveloppe sous isolation gazeuse en particulier pour moyenne tension, caractérisé en ce que le jeu de barres traverse les parois (6, 6′) latérales de l'enveloppe et est équipé d'un agencement de connexion conforme à l'une quelconque des revendications précédentes.

## Patentansprüche

1. Anschlußvorrichtung mindestens für ein Paar von Leitern (3, 3′; 4, 4′), wobei einer der Leiter (3, 4) jedes Paars, erster Leiter genannt, eine Wand (6) eines ersten Abteils (1) und der andere Leiter (3′, 4′) jedes Paars, zweiter Leiter genannt, eine Wand (6′) eines zweiten Abteils (2) durchquert und das Ende des ersten Leiters an das des zweiten Leiters über ein elektrisches Verbindungsorgan (9) angeschlossen ist, das durch eine Isolieranordnung geschützt wird, dadurch gekennzeichnet, daß die Wände (6, 6′) aus Isoliermaterial sind und miteinander über eine periphere Dichtung (7) verbunden sind, die zwischen ihnen einen mit trockener Luft gefüllten Raum gewährleistet und die Isolieranordnung bildet.

2. Vorrichtung nach Anspruch 1, dadurch gekennzeichnet, daß ein feuchtigkeitsabsorbierendes Produkt in dem durch die Wände (6, 6′) begrenzten Raum in der Nähe von dessen Peripherie angeordnet ist.

3. Vorrichtung nach Anspruch 1 oder 2, dadurch gekennzeichnet, daß jede Wand (6, 6′) Zungen (8, 8′) enthält, die vom Abteil (1, 2) nach außen vorstehen und jeden Leiter umgeben, wobei die Zungen (8) der ersten Wand (6) mit den Zungen (8′) der zweiten Wand (6′) verschachtelt sind und so einen Schikanenraum zwischen den Wänden bilden.

4. Vorrichtung nach Anspruch 3, dadurch gekennzeichnet, daß die Zungen (8, 8′) in konzentrischen Kreisen um jeden Leiter (3, 4, 3′, 4′) angeordnet sind.

5. Vorrichtung nach einem beliebigen der vorhergehenden Ansprüche, dadurch gekennzeichnet, daß die Wände (6, 6′) aus Epoxyharz bestehen.

6. Vorrichtung nach Anspruch 5, dadurch gekennzeichnet, daß die Wände (6, 6′) aus Polyurethan bestehen.

7. Vorrichtung nach Anspruch 2, dadurch gekennzeichnet, daß das feuchtigkeitsabsorbierende Produkt vorab mit SF₆-Gas gesättigt wird.

8. Modulare elektrische Schaltstation, insbesondere für Mittelspannungsanlagen, deren Hülle eine Gasisolation enthält, dadurch gekennzeichnet, daß der Satz von Schienen die Seitenwände (6, 6′) der Hülle durchquert und eine Anschlußvorrichtung gemäß einem beliebigen der vorhergehenden Ansprüche enthält.

## Claims

1. An arrangement for connecting at least one pair of conductors (3, 3′) (4, 4′), a "first" conductor (3, 4) of each pair passing through a wall (6) of a first compartment (1), and the "second" other conductor (3′, 4′) of each pair passing through a wall (6′) of a second compartment (2), the end of the first conductor being connected to the end of the second conductor by an electrical link member (9), said electrical connection being protected by an insulating arrangement, the connection arrangement being characterized in that the walls (6, 6′) are made of insulating material and are connected to each other by means of a peripheral sealing gasket (7) guaranteeing between them a space that is filled with dry air and constituting said insulating arrangement.

2. An arrangement according to claim 1, characterized in that a desiccator is disposed in the space delimited by the walls (6, 6′), and close to the periphery thereof.

3. An arrangement according to claim 1 or 2, characterized in that each wall (6, 6′) includes tongues (8, 8′) that project away towards the outside of the compartment (1, 2) and that surround each conductor, the tongues (8) of the first wall (6) interfitting between the tongues (8′) of the second wall (6′), thereby establishing a space having baffles between the walls.

4. An arrangement according to claim 3, characterized in that the tongues (8, 8′) are disposed in concentric circles around each conductor (3, 4, 3′, 4′).

5. An arrangement according to any preceding claim, characterized in that the walls (6, 6′) are made of epoxy resin.

6. An arrangement according to claim 5, characterized in that the walls (6, 6′) are made of polyurethane.

7. An arrangement according to claim 2, characterized in that the desiccator is previously saturated with SF₆ gas.

8. A modular electricity substation having a casing under gaseous insulation, in particular for use at medium tension, the substation being characterized in that its set of busbars passes through the side walls (6, 6′) of the casing and is fitted with a connection arrangement according to any preceding claim.
